(19) Europäisches Patentamt
European Patent Office
Office européen des brevets

(11) Publication number: **0 122 239 B1**

(12) **EUROPEAN PATENT SPECIFICATION**

(45) Date of publication of patent specification: **03.05.89**

(51) Int. Cl.[4]: **C 21 B 13/00**, C 21 B 13/14

(21) Application number: **84850064.1**

(22) Date of filing: **24.02.84**

(54) **Process of producing pig iron from iron ore concentrate.**

(30) Priority: **02.03.83 SE 8301159**

(43) Date of publication of application:
**17.10.84 Bulletin 84/42**

(45) Publication of the grant of the patent:
**03.05.89 Bulletin 89/18**

(84) Designated Contracting States:
**AT BE CH DE FR GB IT LI**

(56) References cited:
**DE-A-2 713 864**
**DE-A-3 031 680**
**DE-B-2 401 909**
**DE-C-2 520 938**
**GB-A-1 451 040**
**GB-A-2 078 779**
**GB-A-2 098 625**

**UMSCHAU, 1984, no. 6, pages 189-194; SCHWERDTFEGER: "Hat der Hochofen Konkurrenten ?**

(73) Proprietor: **IPS INTERPROJECT SERVICE AB**
**S-640 33 Bettna (SE)**

(72) Inventor: **Axelsson, Karl-Lennart**
**Nämndemansbacken 114**
**S-122 36 Enskede (SE)**
Inventor: **Torssell, Krister**
**Bärkevägen 48**
**S-770 20 Söderbärke (SE)**

(74) Representative: **Örtenblad, Bertil Tore**
**Noréns Patentbyra AB Banérgatan 73**
**S-11526 Stockholm (SE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 122 239 B1

## Description

This invention relates to a process of producing iron. The invention, more precisely, refers to a process of iron production, at which a reactor is used, into which the reactants are injected beneath the surface of a molten bath.

A reactor for gas production where also a certain pig iron production occurs is known from SE—PS—7706876-5.

In the Swedish patent a process is disclosed to produce a gas mixture of substantially carbon monoxide (CO) and hydrogen gas ($H_2$) from coal containing a certain amount of water. This is carried out according to the patent, in that carbon is injected into a molten bath in a stoichiometric excess relative to the oxygen injected in the form of iron oxides into the molten bath and simultaneously oxygen gas is injected in order to oxidate the excess carbon. The process, thus, has the object to produce gas, but also a considerable amount of pig iron is produced at this process.

In SE—PS—8103201-3 also a process of coal gasification by using a reactor is described. According to this patent, also carbon, oxygen gas and iron oxides are injected, of which the iron oxides are a coolant. Carbon is injected in a stoichiometric excess relative to oxygen included in the form of oxides in the bath. The invention according to the patent comprises the step of pressurizing the reactor, whereby a substantially greater amount of gas can be generated, because a greater amount of carbon and oxygen gas can be injected in relation to the bath size than in the case when atmospheric pressure prevails. The object of this patent is a high gas production, and the pig iron formed in this case is to be regarded as a byproduct.

The patents referred to above, thus, relate to processes of gas production where highest possible gas production is the aim. That in addition also pig iron is produced, is due to the fact that a renewal of the molten bath is desired in order to prevent the bath from being too heavily contaminated by impurities introduced with the coal.

The present invention, contrary to the technique stated above, relates to a pig iron production process where the energy content of the coal is utilized at maximum. Maximum utilization of coal implies, seen in an overlapping manner, that only carbon dioxide ($CO_2$) leaves the process and at the same time as little coal as possible is supplied to the process. The present invention, more precisely, relates to a process where pre-reduction as well as final reduction are integrated in a process and the energy content of the coal supplied is utilized at maximum.

The present invention, thus, refers to a process of producing pig iron from iron ore concentrate, at which in a smelting reduction reactor vessel iron ore concentrate, coal, oxygen gas and slag former are injected beneath the surface of a molten iron bath in the reactor, which molten iron bath has a carbon content exceeding 1%, which iron ore concentrate before injection into said reactor is pre-reduced in a pre-reduction step, where CO and $H_2$ in the waste gas from said reactor vessel are passed to the pre-reduction step, at which unreduced iron ore concentrate is pre-reduced. The invention is characterized in that the ratio $CO_2/CO$ in the waste gas is caused to increase to a value higher than that corresponding to the condition of equilibrium at atmospheric pressure, but to a value lower than 3 by operating the reactor vessel at a total pressure exceeding atmospheric pressure, whereby a greater heat development in the bath is caused to take place for a certain coal amount, that the injected amount of coal in relation to the amount of concentrate is predetermined to be sufficient for the final reduction of pre-reduced iron ore concentrate in the reactor.

In a pre-reduction step ore concentrate is reduced to a pre-reduction degree, which is at optimum for the final reduction in a reactor.

By reducing ore concentrate finally by means of melt reduction in the reactor while supplying coal a certain amount of CO is formed and will be found in the waste gas from the reactor. The waste gas is cleaned from $CO_2$ by washing whereafter remaining CO is caused to pre-reduce unreduced ore concentrate, whereby CO is oxidated to $CO_2$. According to the process, therefore, coal is supplied to the reactor only in an amount sufficient for the final reduction of the pre-reduced ore concentrate in the reactor. Such an amount of coal is sufficient so that in the waste gas there shall be sufficient CO in order to pre-reduce the unreduced iron ore concentrate in the pre-reduction step. At this process, therefore, the coal consumption is lower than at known processes. The smaller coal amount implies smaller amounts of generated gas, of dust and of slag.

The invention has the object to avoid great gas, dust and slag amounts and to minimize the use of coal, because great amounts of gas, dust and slag give rise to considerable handling problems.

The reduction of iron oxide requires access to reducing agents and can be described by the reactions

$$FeO_x + XCO \rightarrow Fe + XCO_2 \quad (1a)$$

$$FeO_x + XC \rightarrow Fe + XCO \quad (1b)$$

$$FeO_x + XH_2 \rightarrow Fe + XH_2O \quad (2)$$

The reaction according to (1a) and (2) can take place in solid phase to 100% metallization degree, and the product thereof is called sponge iron. This sponge iron must then be smolten and refined prior to

casting and working. When the solid-phase reduction is not carried out to complete metallization, the ore concentrate is only pre-reduced. The reduction degree can be described by the expression

$$FeO_x \quad (3)$$

where x can vary between 0 and 1,5.

A corresponding reaction process (1b) can take place in a molten carboniferous iron bath. The gas-phase formed from the reactions described above then has a composition, which is determined by the reactions

$$CO_2+C \rightleftarrows 2CO \quad (4)$$

and

$$H_2O+CO \rightleftarrows CO_2+H_2 \quad (5)$$

Reaction (4) is substantially displaced to the right at high temperatures and low oxygen potential, i.e. under conditions prevailing in a molten iron bath with more than 1% C. Reactions (4) and (5) together yield a gas composition with more than 98% $CO+H_2$ from the molten iron bath. This is the case at SE—PS—7706876-5 referred to above.

When the reduction work, instead, takes place at a lower temperature in solid phase, the resulting gas composition will be more oxidated, i.e. it includes higher contents of $CO_2$ and $H_2O$.

This implies in concrete terms, that gas generated in a reactor with molten iron bath at about 1500°C by reaction (1b), (4) and (5) can be supplied to a pre-reduction unit at 800—1000°C and there carry out reduction work and then leave the reactor with a $CO_2+H_2O$ content, which is several times higher than outgoing gas from the molten iron bath. When the gas reduction is carried out in steps, for example in 2—3 reactors connected in series, or where ingoing ore concentrate all the time meets the reduction gas in counterflow, the reduction potential in the gas will be utilized effectively.

There will, however, always remain a certain proportion of CO and $H_2$ in the waste gas resulting from the pre-reduction. This residue can be recycled after $CO_2$ and $H_2O$ have been washed out from the gas. In this way, the energy content in the reduction gas can be utilized to 100%. The above consideration is based on that the system always is at equilibrium.

Furthermore, the reactions

$$C+1/2\ O_2 \rightarrow CO \quad (6)$$

and

$$C+O_2 \rightarrow CO_2 \quad (7)$$

are exothermic, and the reaction (7) emits about 250% more heat than reaction (6). Invertedly, the reaction (1b) is endothermic and, thus, requires energy for being realizable.

For reducing iron oxide to a metallic product, therefore, it is necessary to supply energy, for example in that the reactions (6) or (7) yield more heat than required by reaction (1b).

This can be effected in a molten iron bath, in that a carbon-carrying material is supplied in such proportions relative to oxygen gas and iron oxide, that energy balance is achieved. Under the conditions prevailing in a molten iron bath, reaction (6) will be entirely dominating in relation to reaction (7). When pit coal is used, for example steam coal with a certain content of volatile constituents, reaction (6) must take place to such an extent, that the generated heat covers not only the reduction of iron oxide, but also the smelting of ash in ingoing coal and the cracking of the hydrocarbons found in the coal. This means under realistic conditions an unacceptably high coal consumption for producing iron and, in addition, very great amounts of gas of a mean value consisting of CO and $H_2$ (>98%) are generated.

Such an amount of gas which, besides, has so high contents of CO and $H_2$, is not desirable at a pig iron process. It is, of course, not desirable, either, to supply the great amount of coal required.

As briefly mentioned above, the necessary coal amount is decreased, in that in the final reduction step it is sufficient only for reducing pre-reduced ore concentrate. In order thereby to generate the necessary heat, the fact is utilized that reaction (7) emits about 250% more heat than reaction (6). As mentioned above, the ratio $CO_2/CO$ in the waste gas from the reactor is to be caused to increase to a value higher than corresponding to the ratio at atmospheric pressure. This implies that measures must be taken to produce more $CO_2$ and, therefore, the heat generation of reaction (7) is utilized in the reactor.

The ratio $CO_2/CO$, however, shall be caused to increase at maximum to a value, which corresponds to the presence of a sufficient amount of CO in the waste gas for pre-reducing unreduced ore concentrate to a predetermined desired degree.

The following Table shows an example, from which appears how the amount required for the reduction of ore concentrate with X=1.33 varies with the ratio $CO_2/CO$ in the waste gas from a reactor.

| $CO_2/CO$ | Coal (kg/t Fe) | Waste gas ($m^3$n/t Fe) | Slag (kg/t Fe) |
|---|---|---|---|
| 0,005 | 5280 | 11640 | 1766 |
| 0,055 | 2664 | 5752 | 876 |
| 0,5 | 774 | 1521 | 464 |

As appears from the Table, the necessary coal demand can be decreased very substantially by increasing the ratio $CO_2/CO$. The amount of CO required in the waste to render pre-reduction of the ore concentrate possible, implies that the magnitude of the ratio $CO_2/CO$ must not exceed 3. Even at small supplied amounts of coal, thus, the $CO_2/CO$ ratio can be increased additionally in order to generate more heat in the reactor, and still a sufficient amount of CO in the waste gas be obtained for carrying out the pre-reduction.

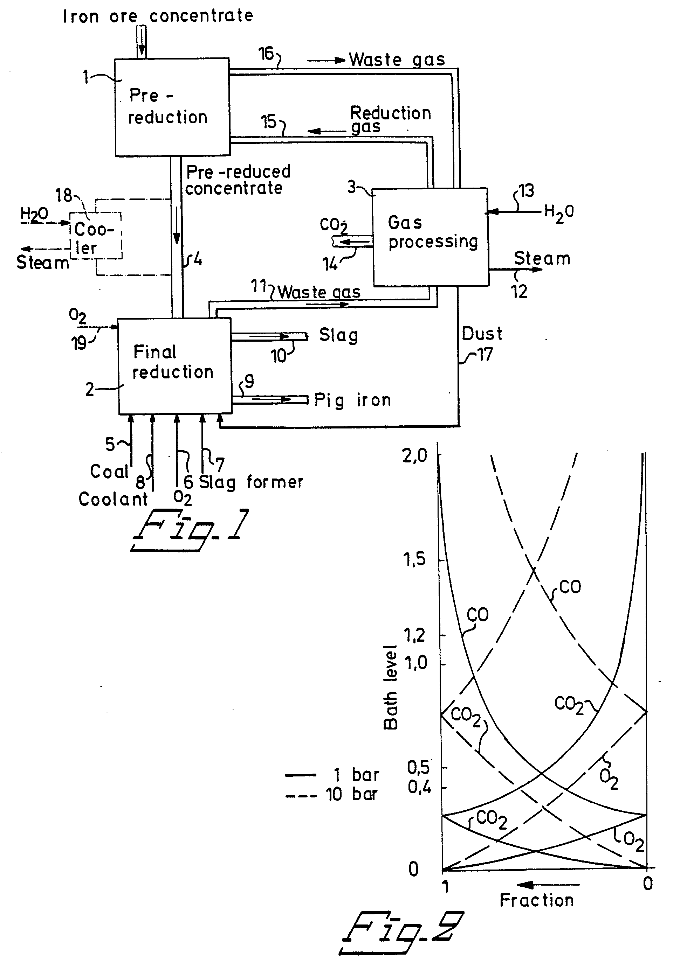

According to the invention, two embodiments exist for increasing the ratio to a value, which is higher than corresponding to the condition of equilibrium at atmospheric pressure, which embodiments are described in the following partially with reference to the accompanying drawing, in which Fig. 1 is a block diagram of a process according to the invention and Fig. 2 is a diagram.

In Fig. 1 a pre-reduction step 1 and a final reduction step 2 are shown.

The pre-reduction step 1 can consist of a two-step or three-step fluidized bed, to which ore concentrate is supplied continuously in the form of concentrate or micropellets, which have been pre-heated, for example to 250°C, in a pre-heating unit (not shown). Into the charge material can at demand be admixed also coal or coke. Of the gas outgoing from the pre-reduction step 1, a certain part containing $CO—CO_2—H_2—H_2O$ can be cleaned from dust in cyclones and recycled to the pre-heating unit. The remaining part of waste gases is recycled via a gas processing unit 3 to the pre-reduction step 1. The pre-reduced iron ore concentrate is passed possibly via an intermediate storage to the final reduction step 2 as indicated by the arrow 4.

When a shaft furnace is used as pre-reduction step, a pre-heating unit is not required.

The final reduction step 2 comprises a reactor with ceramic lining which contains a carboniferous iron bath with a carbon content exceeding 1% at a temperature of 1400—1550°C. The reactor is supplied with pre-reduced iron ore concentrate 4, coal 5, oxygen gas ($O_2$) 6 and slag former 7 (for example CaO). In addition, when appropriate, a coolant 8 is supplied which, for example, can be water. These materials preferably are supplied to the reactor via injection nozzles in the lower part of the reactor, i.e. beneath the surface of the iron bath. Pre-reduced iron concentrate, however, can be supplied via injection nozzles above the surface of the bath or at the slag line.

Pig iron 9 and slag 10 formed in the final reduction step 2 can be tapped continuously or discontinuously in known manner.

The waste gas 11 formed in the final reduction step 2 is passed to a gas processing unit 3 where the gas partially is cleaned from $CO_2$ by washing, and partially is cooled by steam generation 12 from supplied water 13 and partially cleaned from dust. $CO_2$ washed out and cooled is discharged to the free atmosphere.

The gas processing unit 3 comprises also heat exchangers for increasing the temperature of the gas after it was cooled in connection with the $CO_2$-washing and dust cleaning.

The reduction gas 15 leaving the gas processing unit 3 substantially consists of CO and $H_2$. The gas 15 is passed to the pre-reduction step 1 where it is oxidated so as to substantially contain $CO_2$ and $H_2O$. The waste gas 16 from the pre-reduction step 1 is returned to the gas processing unit 3 where remaining CO amount is recovered and returned to the pre-reduction step 1 as reduction gas 15.

In the gas processing unit 3 the waste gas 11 from the reactor is cleaned from dust. The dust 17 is injected into the reactor in the final reduction step 2.

When the CO-content in the waste gas 11 is relatively high, the waste gas 11 possibly can be passed directly from the reactor to the pre-reduction step while being mixed with reduction gas 15, which after having passed the pre-reduction step is cleaned from $CO_2$ by washing in the gas processing unit 3.

A cooler 18 possibly may be provided for cooling the pre-reduced iron ore concentrate 4.

As mentioned above, there are two embodiments to increase the ratio $CO_2/CO$ to a value exceeding the value corresponding to the condition of equilibrium at atmospheric pressure.

At the first one of these embodiments, the reactor is caused to have a total pressure exceeding atmospheric pressure and up to 50 bar, preferably about 2 to 10 bar.

In the SE—PS—8103201-3 referred to above the reactor, as mentioned, is pressurized. The reason why the reactor according to the invention is pressurized is to increase the mass flow through the reactor without increasing the volumetric flow. This renders it possible to generate a gas amount which substantially exceeds that at atmospheric pressure.

It also is known from SE—PS—8103201-3 that reaction (4) above is displaced to the left at increased pressure, whereby the $CO_2/CO$ ratio increases.

The present invention, however, in respect of the first embodiment is based on the understanding, that an increased pressure influences the kinetic conditions in the iron bath of the reactor, so that there is not sufficient time for the equilibrium according to reaction (4) at the pressure in question to be achieved. This condition is explained in Fig. 2, which shows the fraction of $O_2$, $CO_2$ and CO as a function of bath level and pressure. The digram is a prinvipal one, because the fractions are affected by the injection speed.

Oxygen gas is injected from the reactor bottom. The oxygen potential there is high, and the oxygen gas oxidates carbon in the bath to $CO_2$. During the staying time of the gas, $CO_2$ is reduced by the carbon in the bath via reaction (4) to CO. Reaction (5) determines the ratio $H_2O/H_2$. When the gas leaves the bath before equilibrium has been achieved, the generated combustion heat is utilized for reduction. Increased pressure implies, as appears from the diagram, that the amount of $CO_2$ increases in relation to the amount of CO above a bath level of about 0,4 m. The fully drawn lines indicate the fractions adjusted for the kinetic effects arising at atmospheric pressure. The dashed lines indicate corresponding fractions at an over-pressure of 10 bar. The higher the pressure, and the higher the injection speed, the stronger is the kinetic effect.

By pressurizing the reactor, thus, the waste gas can be caused to contain an amount of $CO_2$ in relation to CO which is higher than at atmospheric pressure. At a bath level of about 1,2 m and a total pressure of 10 bar, a waste gas is generated with a $CO_2/CO$ ratio of about 3. As appears from the diagram, a bath level can be chosen where the ratio is substantially higher or substantially lower.

According to a preferred embodiment, the total pressure of the reactor is adjusted by expedient pressure control devices, in order thereby to adjust the ratio $CO_2/CO$ in the waste gas to a predetermined desired value.

According to a preferred embodiment, the level of the metal bath is adjusted by the material amount, which is injected and, respectively, tapped in order thereby to adjust the $CO_2/CO$ ratio in the waste gas to a predetermined desired value.

The bath level and pressure, of course, must be chosen by the expert in view of the prevailing conditions, for example desired reactor volume, reactor capacity and desired amount of CO in the waste gas for the subsequent pre-reduction, with respect paid to minimizing the coal demand.

The increase of the $CO_2/CO$ ratio in the waste gas by pressurizing the reactor results in a greater heat amount developed in the bath for a certain amount of coal supplied, where the strong exothermic reaction (7) is utilized. A relatively seen substantially smaller amount of coal, thus, can at overpressure generate sufficient heat for the reduction of the pre-reduced iron ore concentrate than is the case at atmospheric pressure, owing to said kinetic effect, to which also the effect by the displacement of the reaction (4) to the left is added. The displacement of the reaction (4) at higher pressure to the left, in respect of equilibrium, however, constitutes only a small contribution to an increased $CO_2/CO$ ratio compared to the kinetic effect described above. According to another embodiment, oxygen gas 19 is injected by a lance to the surface of the reactor bath to displace the ratio $CO_2/CO$ to a higher value.

By combusting CO to $CO_2$ at the surface by means of oxygen gas, a great amount of heat is developed, which is passed from the bath surface down in the reactor bath and is utilized by the same. The ratio $CO_2/CO$ in the waste gas 11 from the final reduction step 2, thus, also at this embodiment is substantially higher than corresponding to the condition of equilibrium at the bath surface when atmospheric pressure prevails and oxygen gas is not added.

It is, however, preferable, in addition to pressurization according to the invention to utilize the bath level for adjusting and additionally increasing the $CO_2/CO$ ratio.

Such adjustment is made in view of the CO amount required for the pre-reduction step 1. The CO amount should correspond to or only slightly exceed the amount required for pre-reducing the unreduced iron ore concentrate. At this adjustment, of course, the amount of hydrogen gas ($H_2$) in the waste gas must be taken into consideration, because also this is a reducing gas.

It is apparent from the aforesaid that the idea of the invention is to generate a sufficient heat amount in the final reduction step for melting and reducing a pre-reduced iron ore concentrate. Low coal consumption is achieved by a higher combustion degree of outgoing gas from the final reduction step than the degree determined by the equilibrium with a carboniferous iron bath at atmospheric pressure. The most effective heat generation is obtained when the heat development takes place in the bath, which is the case when the final reduction step is pressurized. The CO amount in the waste gas is utilized for the pre-reduction. The pre-reduction implies that in the final reduction step only pre-reduced iron ore concentrate must be finally reduced.

The invention, as mentioned, results in a low coal consumption, low gas amount and low dust amount in relation to the amount of pig iron produced, compared to known processes where a reactor is used.

The present invention, of course, can be varied in many ways obvious to the expert, especially regarding the design of the different units comprised.

The invention, therefore, must not be regarded restricted to the embodiments set forth above, but can be varied within the scope of the attached claims.

## Claims

1. A process of producing pig iron from iron ore concentrate, at which in a smelting reduction reactor vessel iron ore concentrate, coal, oxygen gas and slag former are injected beneath the surface of a molten

iron bath in the reactor, which molten iron bath has a carbon content exceeding 1%, which iron ore concentrate before injection into said reactor is pre-reduced in a pre-reduction step, where CO and $H_2$ in the waste gas from said reactor vessel are passed to the pre-reduction step, at which unreduced iron ore concentrate is pre-reduced, characterized in that the ratio $CO_2$/CO in the waste gas is caused to increase to a value higher than that corresponding to the condition of equilibrium at atmospheric pressure, but to a value lower than 3 by operating the reactor vessel at a total pressure exceeding atmospheric pressure, whereby a greater heat development in the bath is caused to take place for a certain coal amount, that the injected amount of coal in relation to the amount of concentrate is predetermined to be sufficient for the final reduction of pre-reduced iron ore concentrate in the reactor.

2. A process as defined in claim 1, characterized in that the reactor is caused to have a total pressure up to 50 bar (5 MPa).

3. A process as defined in claim 2, characterized in that the reactor is caused to have a total pressure of about 2 to 10 bar (0.2 to 1 MPa).

4. A process as defined in claims 2 or 3, characterized in that the level of the metal bath of the reactor is controlled in order to adjust the ratio $CO_2$/CO in the waste gas to a predetermined desired value.

5. A process as defined in claims 2 to 4, characterized in that oxygen gas is injected to the bath surface to displace the ratio $CO_2$/CO to a higher value, whereby heat is supplied to the reactor.

**Patentansprüche**

1. Verfahren zur Herstellung von Roheisen aus Eisenerzschlich, bei dem in einem Schmelzreduktionsreaktorgefäß Eisenerzschlich, Kohle, Sauerstoffgas und Schlackenbildner unterhalb der Oberfläche eines Eisenschmelzbades im Reaktor eingeblasen werden, das einen Kohlenstoffgehalt von über 1% hat, und das Eisenerzschlich vor dem Einblasen in den genannten Reaktor in einer Vorreduktionsstufe vorreduziert wird, wo CO und $H_2$ im Abgas von genanntem Reaktorgefäß zu der Vorreduktionsstufe geleitet werden, bei der unreduziertes Eisenerzschlich vorreduziert wird, dadurch gekennzeichnet, daß das Verhältnis $CO_2$/CO im Abgas veranlaßt wird, auf einen Wert zu steigen, der höher ist als der dem Beharrungszustand bei atmosphärischem Druck entsprechende Wert, aber auf einen Wert unter 3 durch Betrieb des Reaktorgefäßes bei einem Gesamtdruck über atmosphärischem Druck, wodurch im Bad eine größere Wärmeentwicklung für eine bestimmte Kohlenmenge stattzufinden veranlaßt wird, und daß die eingeblasene Kohlenmenge in Beziehung zu der Schlichmenge so vorbestimmt ist, daß sie für die abschließende Reduktion von vorreduziertem Eisenerzschlich im Reaktor ausreicht.

2. Verfahren nach Anspruch 1, dadurch gekennzeichnet, daß der Reaktor veranlaß wird, einen Gesamtdruck von bis zu 50 Bar (5 MPa) zu haben.

3. Verfahren nach Anspruch 2, dadurch gekennzeichnet, daß der Reaktor veranlaßt wird, einen Gesamtdruck von etwa 2 bis 10 Bar (0.2 bis 1 MPa) zu haben.

4. Verfahren nach Anspruch 2 oder 3, dadurch gekennzeichnet, daß der Stand der Metallschmelze des Reaktors geregelt wird, um das Verhältnis $CO_2$/CO im Abgas auf einen vorbestimmten gewünschten Wert einzustellen.

5. Verfahren nach den Ansprüchen 2 bis 4, dadurch gekennzeichnet, daß Sauerstoffgas zur Badoberfläche eingeblasen wird, um das Verhältnis $CO_2$/CO auf einen höheren Wert zu verlagern, wobei dem Reaktor Wärme zugeführt wird.

**Revendications**

1. Un procédé de production de fonte à partir de concentrés de minerais de fer pour lequel dans un récipient réacteur par réduction en fusion, le concentré de minerai de fer, le charbon, l'oxygène gazeux et un générateur de scorie sont injectés en dessous de la surface d'un bain de fer fondu dans le réacteur, lequel bain de fer fondu a une teneur en carbone qui dépasse 1%, lequel concentré de minerai de fer avant l'injection dans le dit réacteur est préalablement réduit dans une étape de réduction préalable, dans lequel CO et $H_2$ dans le gaz épuisé provenant du dit récipient passant au stade de réduction préalable, grâce auquel le concentré de minerai de fer non-réduit est réduit au préalable, caractérisé en ce que le rapport $CO_2$/CO dans le gaz épuisé augmente à une valeur plus élevée que celle qui correspond à la condition d'équilibre à pression atmosphérique, mais à une valeur plus basse que 3, en faisant fonctionner le récipient-réacteur à une pression totale qui dépasse la pression atmosphérique par laquelle un dégagement de chaleur plus grand dans le bain est amené à prendre place pour une certaine quantité de charbon, que la quantité de charbon injectée en rapport avec la quantité de concentré est déterminée à l'avance pour être suffisante pour la réduction finale du concentré de minerai de fer pré-réduit dans le réacteur.

2. Un procédé comme défini à la revendication 1 caractérisé en ce que le réacteur est amené à avoir une pression totale allant jusqu'à 50 bars (5 MPa).

3. Un procédé comme défini à la revendication 2 caractérisé en ce que le réacteur est amené à avoir une pression totale d'environ 2 à 10 bars (0,2 à 1 MPa).

4. Un procédé comme défini dans la revendication 2 ou 3 caractérisé en ce que le niveau de bain de

métal du réacteur est régulé de façon à ajuster le rapport $CO_2/CO$ dans le gaz épuisé, à une valeur désirée prédéterminée.

5. Un procédé comme défini dans les revendications 2 à 4 caractérisé en ce que l'oxygène gazeux est injecté à la surface du bain de façon à déplacer le rapport $CO_2/CO$ vers une valeur plus élevée, par lequel la chaleur est fournie au réacteur.

Iron ore concentrate
16
Waste gas
1
Pre-reduction
15
Reduction gas
Pre-reduced concentrate
18
H2O
Cooler
Steam
3
13
H2O
CO2
Gas processing
14
Steam
4
11
Waste gas
12
O2
19
Final reduction
Slag
10
Dust
17
2
9
Pig iron
5
Coal
8
Coolant
6
O2
7
Slag former
Fig. 1
2,0
1,5
1,2
1,0
0,5
0,4
0
Bath level
CO
CO
CO2
CO2
CO2
O2
O2
— 1 bar
--- 10 bar
1
0
Fraction
Fig. 2